# EUROPEAN PATENT APPLICATION

(11) **EP 4 629 160 A1**
(43) Date of publication of application: **08.10.2025**
(21) Application number: 24182700.5
(22) Date of filing: 17.06.2024
(51) Int. Cl.: G06Q 50/04, A24F 40/00, A24F 40/65, H04W 4/80

(54) **AEROSOL PROVISION DEVICE AND SYSTEM**

(30) Priority: 02.04.2024 CN 202410395247
(71) Applicant: Nicoventures Trading Limited, London WC2R 3LA (GB)
(72) Inventor: XIAO, Zhihuang, London (GB); LIN, Hao, Shanghai (CN)
(74) Representative: Whiting, Gary

(57) **Abstract**

A method is described comprising: obtaining a plurality of aerosol provision devices or a plurality of consumables for use with an aerosol provision device; and selecting, for each device or consumable of the plurality, a near-field communication tag for application to the respective device or consumable, wherein each tag is selected from a plurality of candidate tags based, at least in part, on an intended use of the respective device or consumable.

## Description

### Technical Field

The present specification relates to systems and methods for manufacturing or modifying aerosol provision devices or consumables for use with such devices.

### Background

Aerosol provision devices are known that produce an aerosol during use, which is inhaled by a user. For example, tobacco heating devices heat an aerosol generating substrate (such as tobacco) to form an aerosol by heating, but not burning, the substrate. There remains a need for further developments in this field.

### Summary

In a first aspect, there described a method (e.g. a method for applying a tag to an aerosol provision device or a consumable) comprising: obtaining a plurality of aerosol provision devices or a plurality of consumables for use with an aerosol provision device; and selecting, for each device or consumable of the plurality, a near-field communication tag for application to the respective device or consumable, wherein each tag is selected from a plurality of candidate tags based, at least in part, on an intended use of the respective device or consumable. Each of the plurality of candidate tags may be a sticker.

In some example embodiments, each tag is selected based, at least in part, on a jurisdiction in which the respective aerosol provision device or consumable is intended to be used.

The method may further comprise applying the selected tags to the respective devices or consumables.

The devices or consumables may be obtained by receiving the device or the consumable on an assembly line. Alternatively, or in addition, the devices or consumables may be obtained by manufacturing said devices or consumables.

In some example embodiments, each of the plurality of tags comprises a near field communication chip, memory and an antenna.

In some example embodiments, each of the plurality of devices or consumables has identical functionality.

Some example embodiments further comprise determining or defining the intended use of the respective devices or consumables.

In a second aspect, there is described a system (e.g. a system for applying a tag to an aerosol provision device or a consumable) comprising: means (such as a conveyor or an assembly line) for obtaining a plurality of aerosol provision devices or a plurality of consumables for use with an aerosol provision device; and means for selecting, for each device or consumable of the plurality, a near-field communication tag for application to the respective device or consumable, wherein each tag is selected from a plurality of candidate tags based, at least in part, on an intended use of the respective device or consumable.

Each tag may be selected based, at least in part, on a jurisdiction in which the respective device or consumable is intended to be used.

The system may further comprise a tag applicator for applying the selected tag to the respective device or consumable.

The system may further comprise means for manufacturing said devices or consumables.

The system may further comprise means for determining or defining the intended use of the respective devices or consumables.

In some example embodiments, each of said devices or consumables has identical functionality.

In a third aspect, this specification describes computer-readable instructions which, when executed by a computing apparatus, cause the computing apparatus to perform (at least) any method as described herein (including the method of the first aspect described above).

In a fourth aspect, this specification describes a computer-readable medium (such as a non-transitory computer-readable medium) comprising program instructions stored thereon for performing (at least) any method as described herein (including the method of the first aspect described above).

In a fifth aspect, this specification describes an apparatus comprising: at least one processor; and at least one memory including computer program code which, when executed by the at least one processor, causes the apparatus to perform (at least) any method as described herein (including the method of the first aspect described above).

In a sixth aspect, this specification describes a computer program comprising instructions for causing an apparatus to perform at least the following: obtaining (e.g. from a conveyor or an assembly line) a plurality of aerosol provision devices or a plurality of consumables for use with an aerosol provision device; and selecting a near-field communication tag for application to each of the plurality of devices or consumables, wherein each tag is selected from a plurality of candidate tags based, at least in part, on an intended use of the respective device or consumable.

### Brief Description of the Drawings

Example embodiments will now be described, by way of example only, with reference to the following schematic drawings, in which:
FIG. 1 is a is a block diagram of a system in accordance with an example embodiment;
FIG. 2 is a is a block diagram of a process in accordance with an example embodiment;
FIG. 3 is a is a block diagram of a process in accordance with an example embodiment;
FIG. 4 is a is a block diagram of a consumable in accordance with an example embodiment;
FIG. 5 is a is a block diagram of an aerosol provision system in accordance with an example embodiment;
FIG. 6 is a is a block diagram of a near field communication tag that may be used in some example embodiments;
FIG. 7 is a block diagram of a non-combustible aerosol provision device that may be used in some example embodiments;
FIG. 8 is a side-on cross-sectional view of an article for use with a non-combustible aerosol provision device that may be used in some example embodiments;
FIG. 9 is a block diagram of a system in accordance with an example embodiment; and
FIG. 10 is a block diagram of a processing system that may be used to implement one or more of the example embodiments described herein.

### Detailed Description

As used herein, the term "delivery system" is intended to encompass systems that deliver at least one substance to a user, and includes non-combustible aerosol provision systems that release compounds from an aerosol-generating material without combusting the aerosol-generating material, such as electronic cigarettes, tobacco heating products, and hybrid systems to generate aerosol using a combination of aerosol-generating materials.

According to the present disclosure, a "combustible" aerosol provision system is one where a constituent aerosol-generating material of the aerosol provision system (or component thereof) is combusted or burned during use in order to facilitate delivery of at least one substance to a user.

According to the present disclosure, a "non-combustible" aerosol provision system is one where a constituent aerosol-generating material of the aerosol provision system (or component thereof) is not combusted or burned in order to facilitate delivery of at least one substance to a user.

In some embodiments, the delivery system is a non-combustible aerosol provision system, such as a powered non-combustible aerosol provision system.

In some embodiments, the non-combustible aerosol provision system is an electronic cigarette, also known as a vaping device or electronic nicotine delivery system (END), although it is noted that the presence of nicotine in the aerosol-generating material is not a requirement.

In some embodiments, the non-combustible aerosol provision system is an aerosol-generating material heating system, also known as a heat-not-burn system. An example of such a system is a tobacco heating system.

In some embodiments, the non-combustible aerosol provision system is a hybrid system to generate aerosol using a combination of aerosol-generating materials, one or a plurality of which may be heated. Each of the aerosol-generating materials may be, for example, in the form of a solid, liquid or gel and may or may not contain nicotine. In some embodiments, the hybrid system comprises a liquid or gel aerosol-generating material and a solid aerosol-generating material. The solid aerosol-generating material may comprise, for example, tobacco or a non-tobacco product.

Typically, the non-combustible aerosol provision system may comprise a non-combustible aerosol provision device and a consumable for use with the non-combustible aerosol provision device.

In some embodiments, the disclosure relates to consumables comprising aerosol-generating material and configured to be used with non-combustible aerosol provision devices. These consumables are sometimes referred to as articles throughout the disclosure.

In some embodiments, the non-combustible aerosol provision system, such as a non-combustible aerosol provision device thereof, may comprise a power source and a controller. The power source may, for example, be an electric power source or an exothermic power source. In some embodiments, the exothermic power source comprises a carbon substrate which may be energised so as to distribute power in the form of heat to an aerosol-generating material or to a heat transfer material in proximity to the exothermic power source.

In some embodiments, the non-combustible aerosol provision system may comprise an area for receiving the consumable, an aerosol generator, an aerosol generation area, a housing, a mouthpiece, a filter and/or an aerosol-modifying agent.

In some embodiments, the consumable for use with the non-combustible aerosol provision device may comprise aerosol-generating material, an aerosol-generating material storage area, an aerosol-generating material transfer component, an aerosol generator, an aerosol generation area, a housing, a wrapper, a filter, a mouthpiece, and/or an aerosol-modifying agent.

Aerosol-generating material is a material that is capable of generating aerosol, for example when heated, irradiated or energized in any other way. Aerosol-generating material may, for example, be in the form of a solid, liquid or semi-solid (such as a gel) which may or may not contain an active substance and/or flavourants.

The aerosol-generating material may comprise one or more active substances and/or flavours, one or more aerosol-former materials, and optionally one or more other functional material.

The aerosol-generating material may comprise or be in the form of an aerosol-generating film. The aerosol-generating film may comprise a binder, such as a gelling agent, and an aerosol former. Optionally, a substance to be delivered and/or filler may also be present. The aerosol-generating film may be substantially free from botanical material. In particular, in some embodiments, the aerosol-generating material is substantially tobacco free.

A consumable is an article comprising or consisting of aerosol-generating material, part or all of which is intended to be consumed during use by a user. A consumable may comprise one or more other components, such as an aerosol-generating material storage area, an aerosol-generating material transfer component, an aerosol generation area, a housing, a wrapper, a mouthpiece, a filter and/or an aerosol-modifying agent. A consumable may also comprise an aerosol generator, such as a heater, that emits heat to cause the aerosol-generating material to generate aerosol in use. The heater may, for example, comprise combustible material, a material heatable by electrical conduction, or a susceptor.

A susceptor is a material that is heatable by penetration with a varying magnetic field, such as an alternating magnetic field. The susceptor may be an electrically-conductive material, so that penetration thereof with a varying magnetic field causes induction heating of the heating material. The heating material may be magnetic material, so that penetration thereof with a varying magnetic field causes magnetic hysteresis heating of the heating material. The susceptor may be both electrically-conductive and magnetic, so that the susceptor is heatable by both heating mechanisms. The device that is configured to generate the varying magnetic field is referred to as a magnetic field generator, herein.

An aerosol generator is an apparatus configured to cause aerosol to be generated from the aerosol-generating material. In some embodiments, the aerosol generator is a heater configured to subject the aerosol-generating material to heat energy, so as to release one or more volatiles from the aerosol-generating material to form an aerosol. In some embodiments, the aerosol generator is configured to cause an aerosol to be generated from the aerosol-generating material without heating. For example, the aerosol generator may be configured to subject the aerosol-generating material to one or more of vibration, increased pressure, or electrostatic energy.

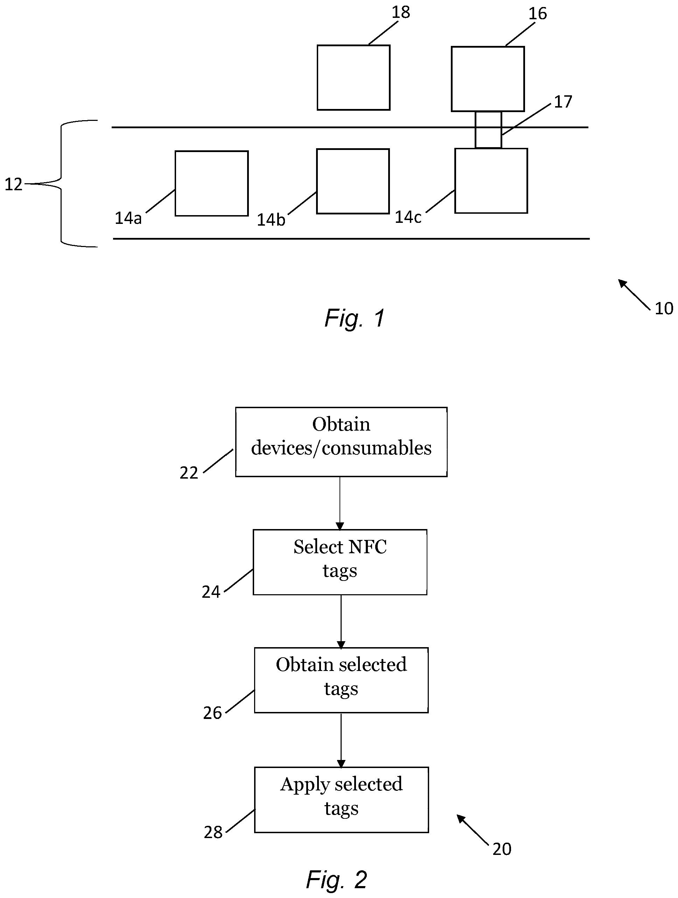

FIG. 1 is a schematic drawing of a system, indicated generally by the reference numeral 10, for applying near-field communication (NFC) tags to articles to be tagged. A plurality of articles to be tagged 14a - 14c are shown in FIG. 1.

The articles to be tagged 14a - 14c may be articles for use as part of an aerosol provision system. In some example embodiments the articles 14a - 14c are aerosol provision devices. In some other example embodiments, the articles 14a - 14c are consumables such as pods for use with an aerosol provision device as part of an aerosol provision system. In yet other example embodiments, the articles 14a - 14c include both aerosol provision devices and consumables for use with such aerosol provision devices.

The system 10 comprises a device 12 for conveying articles to be tagged 14a - 14c. Device 12 is in some examples a conveyor belt, but in other examples device 12 may be some other means for conveying articles 14a - 14c to portions of system 10 so that a tagging process may take place (such as a beltless roller system, or a gravity based system with arresting means, or a mixture of such devices). The skilled person will be aware of many suitable conveying devices. The device 12 may form part of an assembly line in which articles such as aerosol provision devices and/or consumables for use with aerosol provision devices are manufactured.

In some example embodiments, manufacturing steps for manufacturing articles to be tagged are performed on articles 14a - 14c while said articles are on conveying device 12 and before said articles are conveyed to portions of the system responsible for tagging. That is to say, in such example embodiments, the system 10 tags articles 14a - 14c on the assembly line for said articles. In other embodiments, articles 14a - 14c are transferred to conveying device 12 after all articles 14a - 14c have been manufactured.

The system 10 further comprises a processor or control module 18 for selecting an NFC tag for application to articles 14a - 14c. In some example embodiments, the processor or control module 18 is in communication with a memory storing instructions for selecting the NFC tag.

Processor or control module 18 may further be in communication with a source of data that may indicate that an article 14a - 14c is present and that a tag should therefore be selected. For example, the processor or control module 18 may be in communication an optical detector that detects the presence or absence of an article 14a - 14c on the conveying device 12. The skilled person will be aware of many suitable devices and methods for detecting the presence of articles on a variety of conveying systems.

In some example embodiments, the processor or control module 18 is in communication with a source of data indicating one or more properties of the articles 14a - 14c. In some example embodiments, this data is gathered or generated during an earlier step of the manufacturing process and associated with particular articles of the plurality of articles 14a - 14c. In other examples this data is provided at the start of a production run and could be the same for all articles 14a - 14c on conveying device 12 at a particular time. A source of data indicating one or more properties of the articles is not essential to all example embodiments; for example, the processor or control module 18 may select different tags for articles that are otherwise physically identical.

In some example embodiments, the processor or control module 18 is in communication with a source of data indicating or associated with an intended use of articles 14a - 14c. This data may indicate a jurisdiction in which articles 14a - 14c are to be marketed, or may indicate a regulatory status of articles 14a - 14c in a jurisdiction or group of jurisdictions in which they are intended to be marketed.

System 10 comprises a tag obtainer module 16. The tag obtainer module 16 obtains an NFC tag selected by processor or control module 18. In some example embodiments, obtaining said NFC tag includes retrieving the selected tag from a source of suitable NFC tags. For example, a source of NFC tags may include one or more of each of two or more species of NFC tag. NFC tags of a species of NFC tag may, in some example embodiments, be substantially identical to one another, but in other example embodiments, NFC tags of different species may have different information stored in a memory of the NFC tag. In other example embodiments, NFC tags of different species comprise different hardware, such as a different NFC chip.

In some example embodiments, tag obtainer module 16 retrieves tags from a source of NFC tags. The tag obtainer module may obtain the selected tag by reading from and/or writing to a memory of a retrieved tag.

Tag obtainer module 16 may be in communication with processor or control module 18. For example, processor or control module 18 may communicate information associated with the selected tag to obtainer module 16. This information may enable tag obtainer module 16 to determine, from the tags that it may obtain, the selected tag, and obtain the selected tag. For example, the processor or control module 18 may communicate to the obtainer module 16 information that identifies the physical hardware of the tag and/or the content of the memory of the selected tag.

The system 10 further comprises a tag applier 17. Tag applier 17 applies a tag selected by the processor or control module 18 and obtained by the tag obtainer module 16 to one of the articles 14a - 14c. In the example system 10, the tag applier 17 applies the selected tag to article 14c. In some example embodiments tag applier 17 comprises locating means (such as a hollow for accommodating article 14c or a portion of article 14c) that engage with article 14c, conveying device 12, or a portion thereof, to improve the precision and/or accuracy with which tags are positioned on articles for tagging 14a - 14c. In other example embodiments, the conveyor system 12 and tag applier 17 are arranged such that articles may be tagged with sufficient accuracy and precision without relying on locating means. The skilled person will be aware of many suitable mechanical configurations that could be used.

FIG. 2 is a block diagram of an example process, indicated generally by reference numeral 20, for applying NFC tags to articles 14a - 14c to be tagged. The process 20 may be implemented by the system 10 described above.

At step 22, the system 10 obtains a plurality of aerosol provision devices or a plurality of consumables for use with an aerosol provision device (e.g. the articles 14a - 14c described above). In some example embodiments, articles 14a - 14c are obtained by at least partially manufacturing them on conveying device 12 (or some similar conveyor). In other embodiments, articles 14a - 14c are manufactured on a different line, or at a different site, before being transferred to conveying device 12.

At step 24, the system 10 selects an NFC tag to be applied to an article of the articles 14a - 14c (e.g. the article 14c in the example system 10). This step may be performed by processor or control module 18. This step may be performed for each article of the one or more articles.

The selecting step selects a tag for application to an article such that the selected tag can be identified from among a plurality of tags. In some example embodiments, the selecting could include determining an identifier of tag hardware and an identifier of contents of a memory of the selected tag. In other example embodiments the selecting step determines an identifier that identifies a tag from among a list of possible tags. In further example embodiments, the selecting step identifies the contents of a memory of the selected tag but does not necessarily identify the hardware of the selected tag (for example, because the hardware of all tags available to system 10 may be the same). In yet another example embodiment, the selecting step may comprise overwriting a memory of a generic tag with information based on the article. The skilled person will be aware of many ways of selecting a tag by identifying a tag from a plurality of tags.

The selection of a tag for application to an article of articles 14a - 14c may be based on one or more factors, inputs, or considerations.

In some example embodiments, the tag is selected based on one or more of the properties of article 14a - 14c (e.g., the properties inherent to the physical structure and composition of the article) and the intended use of the article 14a - 14c. If article 14a - 14c comprises or is a device for providing an aerosol comprising a substance having a different regulatory status in different jurisdictions (e.g., nicotine), system 10 may select a tag based on information indicating whether article 14a - 14c comprises or is a device for providing an aerosol comprising such a substance and based on information indicating the jurisdiction in which article 14a - 14c is intended to be used. In other example embodiments, the tag may be selected based on the intended use only. For example, if articles 14a - 14c on conveyor device 12 are physically identical, the selecting step 24 could select from a list of tags appropriate for the articles 14a - 14c on conveyor device 12, so no selection based on the properties of the article 14a - 14c would be necessary, and the selection could be based on the intended use of the article 14a - 14c (such as a jurisdiction or group of jurisdictions in which they are to be marketed).

The tag may therefore be selected based on the intended use of the article 14a - 14c or based on the properties of article 14a - 14c and the intended use of the article 14a - 14c.

At step 26, for each article of articles 14a - 14c, the system 10 obtains the respective selected tag. Obtaining a selected tag includes acquiring the selected tag, ready for application to an article of articles 14a - 14c, based on the selection. As discussed above in connection with tag obtainer module 16, in some example embodiments, obtaining the selected tag may involve obtaining a suitable tag from one or more sources of one or more species of tag. In other example embodiments, obtaining the selected tag involves modifying a tag (for example by writing to a memory of the tag).

In other embodiments obtaining a selected tag involves obtaining a tag from one or more sources of one or more species of tag, and then modifying that tag to obtain the selected tag.

At step 28, the system 10 applies the selected tag to the article of articles 14a - 14c to secure the selected tag to the respective article (for example using the tag applier 17 described above).

While the above steps are presented in a particular order, it is not necessary that a particular step is performed on all articles 14a - 14c of a plurality of articles before an article of the plurality of articles progresses to the next step. In some example embodiments an article 14a - 14c of the plurality progresses through all steps before the next article 14a - 14c of the plurality progresses to the second step. In other example embodiments an article will not progress to a subsequent step until all articles have progressed through all prior steps.

Applying NFC tags selected based, at least in part, on an intended use of an article 14a - 14c permits the manufacturing of articles intended for different uses on the same production line. For example, identical devices may be manufactured, with only the tag applied in the step 28 being different.

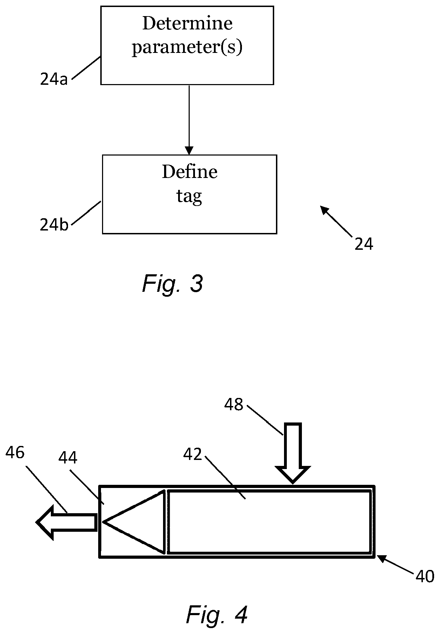

FIG. 3 is a block diagram of an example process in accordance with an example embodiment. The process shown in FIG. 3 is an example implement of step 24 of the process 20 described above.

The process 24 shown in FIG. 3 include a first step 24a, in which one or more parameters are determined, and a second step 24b, in which a tag is defined. The steps 24a and 24b thereby select an NFC tag.

The first step 24a may comprise determining or defining the intended use of the respective devices or consumables. Note that in some example embodiments, each of the plurality of devices or consumables has identical functionality.

The one or more parameters determined in the step 24a may include the jurisdiction in which the article is intended to be used or marketed. However, alternative parameters may be determined in addition to, or instead of, the intended jurisdiction. These may relate to operation parameters (such as a temperature profiles or quantities of active substances provided by the article).

The definition in step 24b may enable one of a plurality of types of tags that are available for selection to be selected. Alternatively, the step 24b may enable suitable data to be written to a generic tag.

In some example embodiments, an aerosol provision device has an NFC reader, suitable for reading an NFC tag of an inserted/attached consumable and configured to read the tag (by accessing data in a memory of the tag using near-field communication) before causing the provision of aerosol by that device using the consumable. If that consumable is one of the articles 14a - 14c described above, then the tag can provide information such as the regulatory status of the product in the jurisdiction in which it was sold, as the tag of the consumable may have been selected based on being for use in that jurisdiction.

Once the aerosol provision device has been informed of the regulatory status of the consumable, the device may (as may be required by the law in a particular jurisdiction) require that the user of the aerosol provision device is authorised to use the consumable, and may require authentication of this. In some example embodiments, the device may store in a memory an indicator of the identity of the user and the kind of authentication of that identity that was used (for example, the indicator of identity may be an age of the user, and the kind of authentication may be authentication based on user-submitted scans of an identification document using a personal device, or authentication based on an assessment by a third party using a point-of-sale device).

In other example embodiments, the system 10 may apply a selected tag to the aerosol provision device itself. An NFC reader device may then determine the regulatory status of the aerosol provision device in the jurisdiction in which it was sold based on data stored in the memory of the tag. In some example embodiments, an NFC reader device is a point-of-sale device or a personal mobile phone, and "unlocking" the aerosol provision device for use may require that the NFC reader device reads the memory of the NFC tag, determines the requirements for unlocking that should be applied based at least in part on at least some of the data stored in a memory of the NFC tag, enters two-way communication with the aerosol provision device, and unlocks the device if those requirements for unlocking are met (such as a certain age, verified by scanning particular documents. The skilled person will, however, be aware of many alternative implementations.

In the above mentioned two examples, the NFC tag is applied to a consumable in the first example and an aerosol provision device in the second example, and the NFC tag is read by the aerosol provision device and a separate NFC reader device in the respective examples, and the operation of the aerosol provision device is controlled on the basis of data read from the memory of the NFC tag. The skilled person will appreciate from the above that data stored by an NFC tag of a consumable or aerosol provision device may be read by a variety of reader devices (including an aerosol provision device having a reader), and the operation of the aerosol provision device may be controlled based on data from the NFC tag read by a reader device. The skilled person will be aware of other reader devices that may implement this method.

While the authentication process could be carried out by the aerosol provision device if suitable hardware were incorporated therein, in some example embodiments, a separate device having a separate processor and memory, such as a point-of-sale device, may control whether the aerosol provision device is to provide aerosol.

Example embodiments therefore provide systems and methods of adapting the articles 14a - 14c for use in different jurisdictions without making changes to the hardware of articles 14a - 14c that may necessitate the use of a different production line or additional design work, allowing articles 14a - 14c for use in different jurisdictions to be made more cost effectively and allowing for quick adaptation to regulatory changes in different jurisdictions.

FIG. 4 is a block diagram of a consumable, indicated generally by reference numeral 40, in accordance with an example embodiment.

Consumable 40 is a pod in the illustrated embodiment. However, consumable 40 may be any consumable suitable for use in an aerosol provision system. System 10 may attach tag 30 to consumable 40 (that is to say, articles 14a - 14c may be consumables 40).

Consumable 40 is not shown with an NFC tag attached. In some example embodiments an NFC tag such as NFC tag 30 is attached to consumable 40 by system 10. In some example embodiments NFC tag 30 is in the form of a sticker (as discussed above) and may be attached to any generally flat surface of consumable 40, or any surface having the general shape of a portion of a cylinder. The skilled person will be aware of other forms that NFC tag 30 may take, and other means of attaching NFC tag 30 to consumable 40.

Consumable 40 comprises an aerosol generator 42. The aerosol generator 42 may comprise a resistive heater for heating an aerosol generating material, which is not shown, (e.g. a film or a gel) to generate an aerosol (e.g. a vapour). It should be noted that the use of resistive heating of an aerosol generating material is described by way of example only. For example, aerosol generator 42 may instead comprise a susceptor, and rely on an inductor internal or external to consumable 40 to cause inductive heating of aerosol generator 42. The skilled person would be aware that the principles described herein are applicable to aerosol provision systems other than those using the resistive heating of this example embodiment.

When consumable 40 in use in a suitable aerosol provision system, air is drawn into an air inlet of the aerosol generator 42, as indicated by arrow 48. An aerosol generated by the aerosol generator 42 exits the device at an air outlet, as indicated by arrow 46 (for example into the mouth of a user of consumable 40).

Consumable 40 is provided by way of example only and is highly schematic. Many variants are possible. In aerosol provision systems of other example embodiments, air may take a different path through the consumable. In such embodiments air may enter consumable 40 through an interface between consumable 40 and another portion of the system, and aerosol may leave through a mouthpiece, or air may enter through an inlet of the aerosol generator 42 and aerosol may leave through an interface between consumable 40 and another portion of the system.

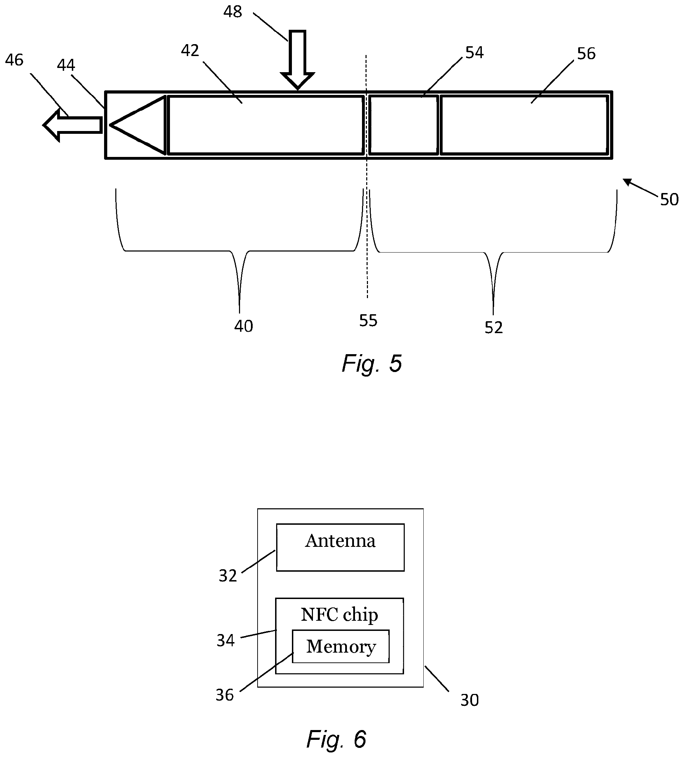

FIG. 5 is a block diagram of an aerosol provision system according to an example embodiment, indicated generally by reference numeral 50. Aerosol provision system 50 comprises aerosol provision device 52 and consumable 40.

The aerosol provision device 52 of aerosol provision system 50 comprises a battery 56 (e.g. a rechargeable battery) and a control circuit 54.

In the use of aerosol provision system 50, control circuit 54 receives and interprets user inputs and causes the provision of aerosol when appropriate. Battery 56 provides power used by control circuit 54 and the heating arrangement of system 50. In example embodiments aerosol generator 42 comprises a resistive heater, and in this case an electrical connection between battery 56 and the resistive heater of generator 42 is formed to power the heater. In other example embodiments, the battery 56 may power an inductor within device 52 that causes heating in a susceptor of generator 42, and in such cases there may be no direct electrical connection between battery 56 and consumable 40. The skilled person will be aware of many possible mechanisms for heating generator 42 using power from battery 56.

The example aerosol provision system 50 comprises two main components, namely an aerosol provision device 52 and a consumable 40. In use of the aerosol provision system 50, the aerosol provision device 52 and consumable 40 may be releasably connected at an interface 55. Consumable 40 may be removable and replaceable (e.g. when the consumable is used), with the aerosol provision device 52 being re-used with a different consumable 40.

In other example embodiments, the aerosol provision system 50 may not be separable into two parts, and in such embodiments the aerosol provision device 52 may need to be replaced whenever consumable 40 is replaced.

While consumable 40 is represented schematically as a pod in this example embodiment, the skilled person would recognise that consumable 40 could equally be a different configuration of consumable in other example embodiments.

FIG. 6 is a block diagram of an NFC tag, indicated generally by reference numeral 30, that may be used in some example embodiments. The NFC tag 30 may be suitable for application to articles 14a - 14c.

The NFC tag 30 comprises an antenna 32, an NFC chip 34, and a memory 36. In some embodiments, memory 36 forms part of NFC chip 34 (as shown in FIG. 6).

The antenna 32 of NFC tag 30 is configured to receive prompts from an NFC reader device. A prompt may be a radio frequency signal. Said prompt may power tag 30 through inductive coupling between antenna 32 and the reader providing the prompt. Said prompt may also carry instructions.

The NFC chip 34 may receive said prompt (in the form of a radio frequency signal) from antenna 32. The prompt may instruct NFC chip 34 to retrieve data form memory 36 and transmit this data to the reader that initially provided the prompt using antenna 32.

The components of tag 30 can be arranged in several forms. In some example embodiments, tag 30 takes the form of a sticker. Such a sticker may comprise a membrane to which antenna 32, chip 34, and memory 36 are attached, and an adhesive layer. In some embodiments, antenna 32, chip 34, and memory 36 are secured between two membranes, and the adhesive is present on the outer side of one of the membranes so that the sticker may be secured to a device.

In other example embodiments, the components of tag 30 may be arranged in another manner. For example, the components could be attached to a rigid structure, and an alternative means for attaching tag 30 to an article could be used, such as mechanical fasteners, or protrusions, indentations, or locating features. The skilled person will be aware of various constructions of NFC tag and fastening means for securing an NFC tag to an article.

The aerosol provision system 50 is one example of a system that may be used in some example embodiments. However, as noted above, there are many alternative aerosol provision devices or systems, or consumables for such devices or systems, to which the principles described herein may be relevant.

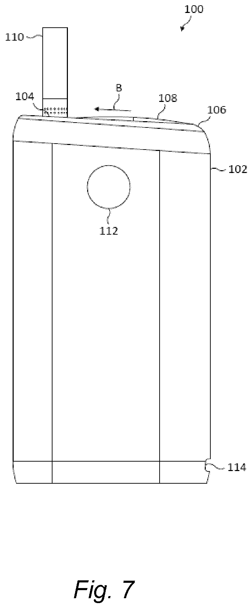

FIG. 7 is a block diagram of a non-combustible aerosol provision device, indicated generally by the reference numeral 100, that may be used in some example embodiments.

The device 100 is an example of a non-combustible aerosol provision device for generating aerosol from an aerosol generating medium/material. In broad outline, the device 100 may be used to heat a replaceable article 110 comprising an aerosol generating medium to generate an aerosol or other inhalable medium which is inhaled by a user of the device 100. The device 100 and replaceable article 110 together form a system. The replacement article 110 is an example of a consumable, as discussed above.

The device 100 comprises a housing 102 (in the form of an outer cover) which surrounds and houses various components of the device 100. The device 100 has an opening 104 in one end, through which the article 110 may be inserted for heating by a heating assembly. In use, the article 110 may be fully or partially inserted into the heating assembly where it may be heated by one or more components of the heating assembly.

The device 100 of this example comprises a first end member 106 which comprises a lid 108 which is moveable relative to the first end member 106 to close the opening 104 when no article 110 is in place. In FIG. 7, the lid 108 is shown in an open configuration, however the lid 108 may move into a closed configuration. For example, a user may cause the lid 108 to slide in the direction of arrow "B".

The device 100 may also include a user-operable control element 112, such as a button or switch, which operates the device 100 when pressed. For example, a user may turn on the device 100 by operating the switch 112.

The device 100 may also comprise an electrical component, such as a socket/port 114, which can receive a cable to charge a battery of the device 100. For example, the socket 114 may be a charging port, such as a USB charging port.

The device 100 may be provided with an NFC tag, as discussed in detail above. Alternatively, or in addition, the article 110 may be provided with an NFC tag.

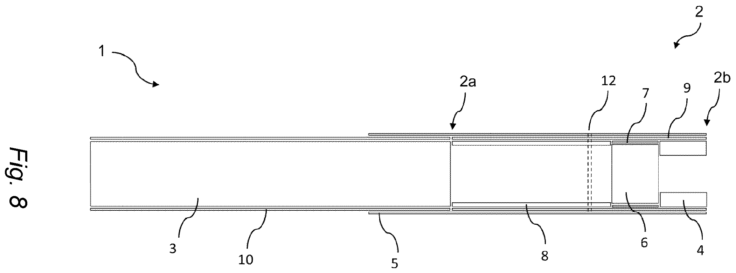

FIG. 8 is a side-on cross-sectional view of an article, indicated generally by the reference numeral 1, for use with a non-combustible aerosol provision device, such as the device 100 described above.

The article 1 comprises a mouthpiece 2, and a cylindrical rod of aerosol generating material 3 (e.g. tobacco material) connected to the mouthpiece 2. The aerosol generating material 3, also referred to herein as an aerosol generating substrate 3, comprises at least one aerosol forming material (such as glycerol). In alternative examples, the aerosol forming material can be another material as described herein or a combination thereof. The aerosol forming material has been found to improve the sensory performance of the article, by helping to transfer compounds such as flavour compounds from the aerosol generating material to the consumer.

The part of the mouthpiece which comes into contact with a consumer's lips may be a paper tube, which is either hollow or surrounds a cylindrical body of filter material.

As shown in FIG. 8, the mouthpiece 2 of the article 1 comprises an upstream end 2a adjacent to the aerosol generating substrate 3 and a downstream end 2b distal from the aerosol generating substrate 3. At the downstream end 2b, the mouthpiece 2 has a hollow tubular element 4 formed from filamentary tow. This has advantageously been found to significantly reduce the temperature of the outer surface of the mouthpiece 2 at the downstream end 2b of the mouthpiece which comes into contact with a consumer's mouth when the article 1 is in use. In addition, the use of the tubular element 4 has also been found to significantly reduce the temperature of the outer surface of the mouthpiece 2 even upstream of the tubular element 4.

The outer circumference of the mouthpiece 2 is substantially the same as the outer circumference of the rod of aerosol generating material 3, such that there is a smooth transition between these components. In the present example, the outer circumference of the mouthpiece 2 is about 20.8mm. A tipping paper 5 is wrapped around the full length of the mouthpiece 2 and over part of the rod of aerosol generating material 3 and has an adhesive on its inner surface to connect the mouthpiece 2 and rod 3. In the present example, the tipping paper 5 extends 5 mm over the rod of aerosol generating material 3 but it can alternatively extend by other lengths. The tipping paper 5 can have a basis weight which is higher than the basis weight of plug wraps used in the article 1, for instance a basis weight of 40 gsm to 80 gsm. The outer circumference of the tipping paper 5, once wrapped around the mouthpiece 2, is about 21mm.

The mouthpiece 2, in the present example, includes a body of material 6 upstream of the hollow tubular element 4, in this example adjacent to and in an abutting relationship with the hollow tubular element 4. The body of material 6 and hollow tubular element 4 each define a substantially cylindrical overall outer shape and share a common longitudinal axis. The body of material 6 is wrapped in a first plug wrap 7.

In the present example the hollow tubular element 4 is a first hollow tubular element 4 and the mouthpiece includes a second hollow tubular element 8, also referred to as a cooling element, upstream of the first hollow tubular element 4.

The second hollow tubular element 8 is located around and defines an air gap within the mouthpiece 2 which acts as a cooling segment. The air gap provides a chamber through which heated volatilised components generated by the aerosol generating material 3 flow.

In the present example, the first hollow tubular element 4, body of material 6 and second hollow tubular element 8 are combined using a second plug wrap 9 which is wrapped around all three sections.

In the present example, the aerosol generating material 3 is wrapped in a wrapper 10. The wrapper 10 can, for instance, be a paper or paper-backed foil wrapper. The wrapper may comprise aluminium foil.

The aerosol generating material 3 may be provided as a cylindrical rod of aerosol generating material, for example having a length of about 10 mm to 100 mm. The aerosol generating material or substrate may be formed from tobacco material as described herein, which includes a tobacco component. In the tobacco material described herein, the tobacco component may contain paper reconstituted tobacco. The tobacco component may also contain leaf tobacco, extruded tobacco, and/or bandcast tobacco. The tobacco material may be provided in the form of cut rag tobacco.

In the tobacco material described herein, the tobacco material may contain a filler component. The filler component is generally a non-tobacco component, that is, a component that does not include ingredients originating from tobacco.

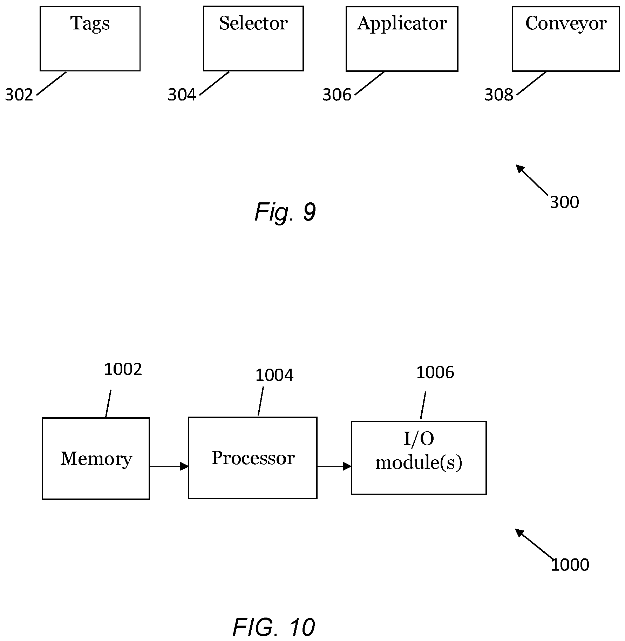

FIG. 9 is a block diagram of a system, indicated generally by the reference numeral 300, in accordance with an example embodiment.

The system 300 comprises a repository of tags 302, a tag selector 304, a tag applicator 306 and a conveyor 308. The conveyor 308 may form part of an assembly line that presents articles (such as the articles 14a - 14c described above) to which an NFC tag is to be applied. The conveyor may therefore be the device 12 described above.

The selector 304 may be the tag obtainer module 16 described above. The selector 304 obtains tags from the repository of tags 302. The selector 304 selects, for a device or consumable presented by the conveyor 308, a near-field communication tag for application to the respective device or consumable, each tag being selected from the tags of the repository. The selection may be made based, at least in part, on an intended use of the respective device or consumable, such as a jurisdiction in which the respective device or consumable is intended to be used. The selector 304 may include a mechanism for determining or defining the intended use of the respective device or consumable.

The applicator 306 may be the tag applier 17 described above. The applicator applies a selected tag to an article as presented by the conveyor 308.

FIG. 10 is a block diagram of a processing system, indicated generally by the reference numeral 1000, that may be used to implement one or more of the example embodiments described previously (e.g. elements of the algorithm 20 described above). The processing system 1000 may, for example, be (or may include) the apparatus referred to in the claims below.

The processing system 1000 may comprise a processor 1004, a memory 1002 coupled to the processor (e.g. comprising a random access memory (RAM) and/or a read only memory (ROM)). The processing system 1000 may also comprise one or more input/output (I/O) modules 1006, such as one or more user interface modules.

The memory 1002 may comprise code which, when executed by the processor 1004 implements aspects of the methods and algorithms described herein.

The memory 1002 and the processor 1004 may form part of the controller 204 of the processor or control module 18 described above or may form part of the selector 304 or applicator 306 described above.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc., other than those specifically described herein. In addition, this disclosure may include other inventions not presently claimed, but which may be claimed in future.

## Claims

1. A method comprising:
obtaining a plurality of aerosol provision devices or a plurality of consumables for use with an aerosol provision device; and
selecting, for each device or consumable of the plurality, a near-field communication tag for application to the respective device or consumable, wherein each tag is selected from a plurality of candidate tags based, at least in part, on an intended use of the respective device or consumable.

2. A method as claimed in claim 1, wherein each tag is selected based, at least in part, on a jurisdiction in which the respective aerosol provision device or consumable is intended to be used.

3. A method as claimed in claim 1 or claim 2, further comprising applying the selected tags to the respective devices or consumables.

4. A method as claimed in any one of claims 1 to 3, wherein the devices or consumables are obtained by receiving the device or the consumable on an assembly line.

5. A method as claimed in any one of claims 1 to 4, wherein the devices or consumables are obtained by manufacturing said devices or consumables.

6. A method as claimed in any one of claims 1 to 5, wherein each of the plurality of tags is a sticker.

7. A method as claimed in any one of claims 1 to 6, wherein each of the plurality of tags comprises a near field communication chip, memory and an antenna.

8. A method as claimed in any one of claims 1 to 7, further comprising determining or defining the intended use of the respective devices or consumables.

9. A method as claimed in any one of claims 1 to 8, wherein each of the plurality of devices or consumables has identical functionality.

10. A system comprising:
means for obtaining a plurality of aerosol provision devices or a plurality of consumables for use with an aerosol provision device; and
means for selecting, for each device or consumable of the plurality, a near-field communication tag for application to the respective device or consumable, wherein each tag is selected from a plurality of candidate tags based, at least in part, on an intended use of the respective device or consumable.

11. A system as claimed in claim 10, wherein each tag is selected based, at least in part, on a jurisdiction in which the respective device or consumable is intended to be used.

12. A system as claimed in claim 10 or claim 11, further comprising a tag applicator for applying the selected tag to the respective device or consumable.

13. A system as claimed in any one of claims 10 to 12, wherein the means for obtaining the plurality of devices or consumables comprises a conveyor and/or an assembly line.

14. A system as claimed in any one of claims 10 to 13, further comprising means for manufacturing said devices or consumables.

15. A computer program comprising instructions for causing an apparatus to perform at least the following:
obtaining a plurality of aerosol provision devices or a plurality of consumables for use with an aerosol provision device; and
selecting a near-field communication tag for application to each of the plurality of devices or consumables, wherein each tag is selected from a plurality of candidate tags based, at least in part, on an intended use of the respective device or consumable.
